# EUROPEAN PATENT SPECIFICATION

(11) **EP 2 295 311 B1**
(45) Date of publication and mention of the grant of the patent: **21.11.2012**
(21) Application number: 10195052.5
(22) Date of filing: 11.05.2009
(51) Int. Cl.: B62D 15/02, B60W 50/08, G05D 1/02, B60W 50/16

(54) **Lane changing assistance method for controlling a vehicle driving aid system for lane changing assistance**
Fahrzeugfahrhilfesystem zur Unterstützung beim Wechseln der Fahrspur
Système d'aide à la conduite de véhicule pour une aide au changement de voie

(30) Priority: 12.05.2008 EP 08425329
(43) Date of publication of application: 16.03.2011
(62) Divisional of application: 09746237.8
(73) Proprietor: Iveco S.p.A., 10156 Torino (IT)
(72) Inventor: Vada, Maurizio, 14100, Asti (IT); Aimo Boot, Marco, 10072, Caselle Torinese (IT)
(74) Representative: Borsano, Corrado

(56) References cited:
- EP-A- 1 598 233
- EP-A1- 0 640 903
- WO-A-01/85491
- WO-A-2006/092431
- WO-A-2007/014633
- US-A1- 2004 225 424
- US-A1- 2004 262 063
- US-A1- 2007 179 712

## Description

### Field of the invention

This invention relates to lane changing assistance method for controlling a vehicle driving aid system for lane changing assistance.

### Description of the prior art

Vehicle driving aid system for lane changing assistance are already known in the art.

For example, patents EP-1312506 or WO2007/014633 considered as the closest prior art, describe a driving aid system suitable for assisting the driver in a lane-change manoeuvre, by signalling potential dangers, i. e. vehicles approaching in the adjacent lanes which may collide with the assisted vehicle during the lane-change manoeuvre.

The systems of the type known, in order to obtain a monitoring system of the lateral lane, use an external video camera, preferably integrated in the lateral rear-view mirror, that provides an output signal suitable for detecting the presence and the movement of another vehicle in the adjacent lane.

Other examples of monitoring systems are given on US2004/262063 and EP0640903.
This system, however, is not the optimal system, because the detection range does not exceed the length of the vehicle, therefore it cannot correctly detect the vehicles approaching at high speed from a long distance, which may negatively interfere with the normal driver's reaction time to obstacles.
Therefore said known solutions provide limited levels of driving assistance, that are not sufficient in order to guarantee a thorough assistance in all dangerous driving situations.

### Summary of the invention

Therefore the aim of this invention is to provide a lane changing assistance method that solves all the problems set forth above.

This invention relates to a vehicle lane changing assistance method for controlling a vehicle driving aid system for lane changing assistance, according to claim 1. Preferably the lane changing assistance module (LCAM) allows to prevent the emergency condition generated by the approaching of another vehicle along the same lane onto which the vehicle changing the lane is travelling, by means of an appropriate steering intervention, that is by applying an active steering torque that prevents the driver to carry out a lane-change manoeuvre in dangerous conditions.

This invention refers in particular to a vehicle driving aid system for lane changing assistance, as described more fully in the claims, which are an integral part of this description.

### Brief description of the figures

The purposes and advantages of this invention will become clear from the following detailed description of a preferred embodiment (and the relative alternative forms of embodiment) and the drawings that are attached hereto, which are merely illustrative and not limitative, in which:
- figures from 1.1 to 1.6 show the diagrams of typical situations of road circulation wherein the lane changing assistance system according to this invention is applied;
- figures 2.1 and 2.2 respectively show the diagrams of the road bending radius and of the vehicle trajectory with respect to the traffic lane;
- figures from 3.1 to 3.4 show two positioning variants of the radars on the vehicle;
- figure 4 shows a functional block diagram of the driving aid system according to this invention;
- figure 5 shows a diagram of the counteracting torque applied to the steering by the system;
- figure 6 shows a finite state diagram of the functioning of the software of the system.

In the figures the same reference numbers and letters are used to identify the same components or functionally equivalent components, elements or magnitudes.

### Detailed description of the invention

The system that is object of the invention is now described in detail with reference to its main constituent modules.

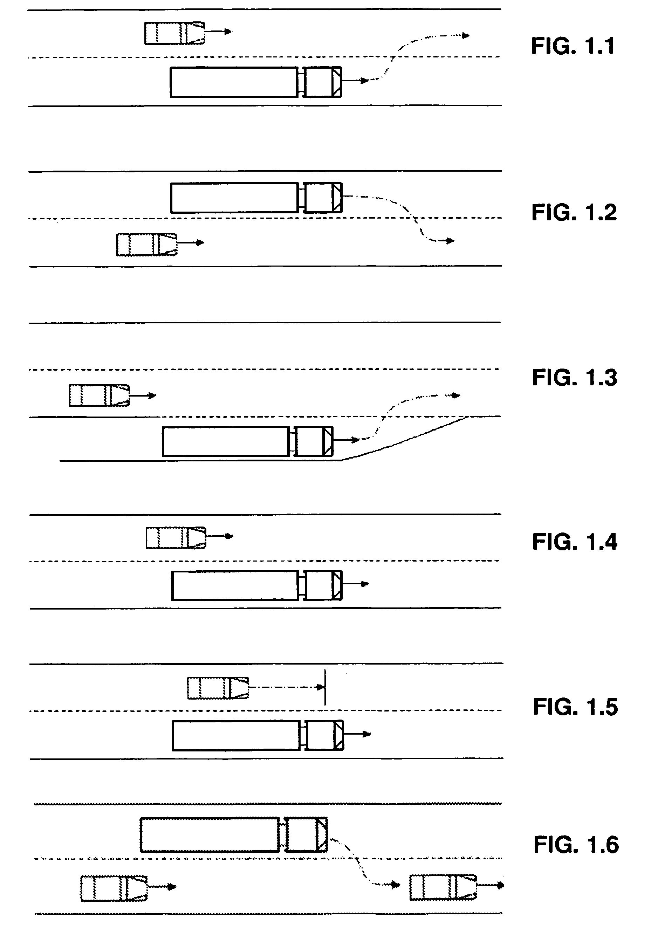

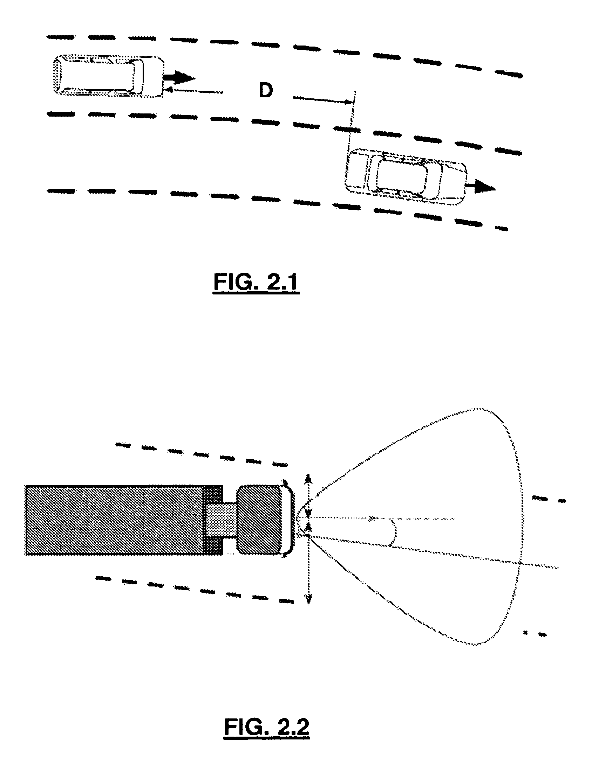

The lane changing assistance system, from now on called LCA, comprises two main functions:
- checking of the presence of vehicles in adjacent zones, i.e. in parallel on the lateral lane (blind spot monitoring);
- checking of the vehicles approaching from behind, with the evaluation of the distance and of the approaching relative speed (closing vehicle monitoring).
The LCA system informs the driver of the presence of vehicles according to the two functions described above, both in case the vehicle keeps its lane and in case the driver attempts a lane-change manoeuvre.
Therefore the LCA system has two purposes: firstly it informs the driver of the presence of vehicles in the blind spot (when the direction indicator is activated); secondly it warns the driver in case he/she attempts dangerous lane-change manoeuvres. For this reason it is necessary to detect the presence of other vehicles both in the blind spots and in the lanes adjacent to the lane onto which the vehicle is travelling. For the warning function it is also necessary to know the distance and the speed of the following vehicles, in order to evaluate how critical they are.
It is important to remember that a high percentage of the accidents takes place in the following way: two vehicles follow parallel trajectories, one of these two changes lane and collides with the other vehicle.
As regards its functioning, the LCA system has preferably the following characteristics:
- it works on any kind of road, typically on more parallel lanes, with minimal bending radius which may be for example 125, 250 or 500 m (fig. 2.1) depending on the cases;
- it intervenes within a certain vehicle speed range, for example from a minimum speed of about 5 km/h, to a maximum speed corresponding to the limit allowed by the law (90 km/h for heavy trucks);
- it has to work in any weather condition, even the most difficult, for example fog, heavy showers, or snow, and in any lighting condition, even at night;
- it has to detect any type of vehicle.
The typical lane-change situations are those in figure 1:
changing to the left, for overtaking or for driving in a column (fig. 1.1); changing to the right for ending an overtaking or for driving in a column (fig. 1.2); getting into the lane from a rest area, or lane changing when the one onto which the vehicle is travelling is blocked (1.3);
keeping its lane when a vehicle overtakes on the lateral lane (fig.1.4), or when a vehicle is in the blind spot (fig. 1.5);
steering back to the right lane after overtaking (fig. 1.6).

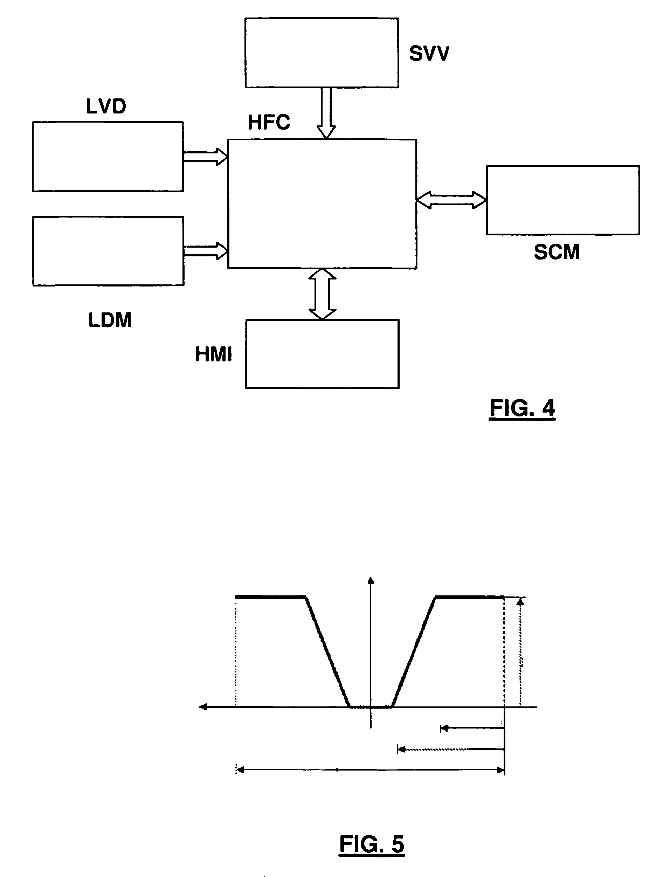

The LCA system presents a type of architecture as in Fig. 4.

A lane detection module LDM, comprising a visual system, constituted by a telecamera and an appropriate HW/SW, able to process the images and to detect the geometry of the road and the vehicle trajectory (see diagram in figure 2.2) with respect to the traffic lane.

A lateral detection module LVD, comprising a sensory system able to detect objects in the adjacent lanes and to measure their position and speed.

A steering control module SCM, able to transfer the torque calculated by the functional control algorithms to the steering wheel, the steering box may be equipped with electric power steering, torque sensor and steering angle.

A vehicle data module SVV, able to provide the data regarding vehicular parameters, such as vehicle speed , yaw rate, lateral acceleration, steering angle, direction indicator, etc.

A control module of haptic reaction HFC, comprising an electronic control unit which receives the input from the lane and the lateral detection modules and the vehicle data module, and provides a counteracting torque to be transmitted to the vehicle steering system.

A human-machine interface module HMI, which interfaces the driver with the LCA functionality.
More in particular, the lateral detection module LVD comprises one or more radars in order to carry out the lateral vision.
The lateral vision system detects the vehicles in the adjacent lanes.
The detection is based on the analysis of the movements of the detected objects: all the elements in the environment (road, houses, trees, parked cars, etc.) have a relative motion with an direction opposite to that of the vehicles that are overtaking. When the vehicle is not in the predetermined activation field (minimum speed<vehicle maximum speed), the function is automatically disabled. The analysis is carried out by the radars and by their respective software in a specific portion of the image, corresponding to the immediately adjacent lane. This analysed area is dynamically adapted to the changes in the road geometry on the basis of the signals sent by the other sensors on the vehicle.
The radar provides the following measures:
- presence of objects in the adjacent lane, with an horizontal field of view i.e. of 40°;
- evaluation of the distance of the obstacle, with a maximum distance field of for example 100 m backwards (distance D in fig. 2.1);
- evaluation of the relative speed with respect to the vehicle approaching in the lateral lane.

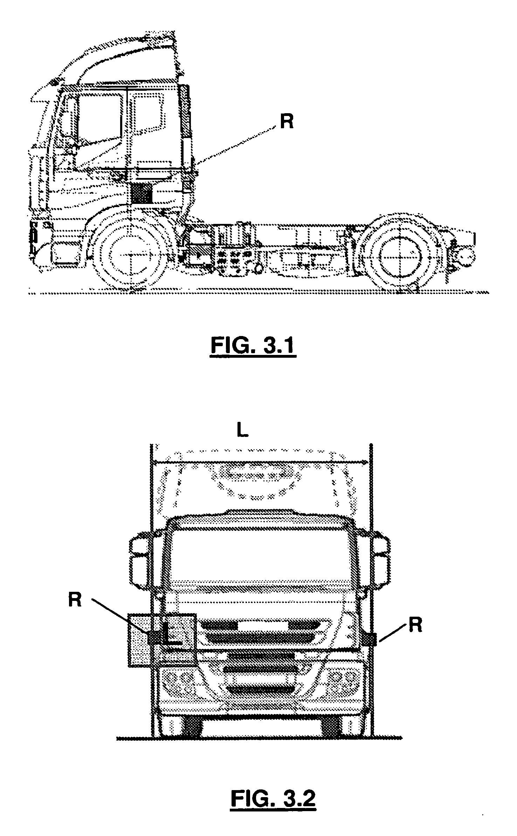

As regards its positioning, with reference to figures 3.1 and 3.2, the radar R is placed projecting from lateral wall of the vehicle, in order to guarantee an optimal functioning. Preferably there are two radars, one for each side, in order to control both the adjacent lanes, at an appropriate height that is not too far from the ground, preferably above the front wheel, at about 1.2 m on the cabin side, and pointed at the back of the vehicle, in order to optimize its pointing and its irradiation diagram.

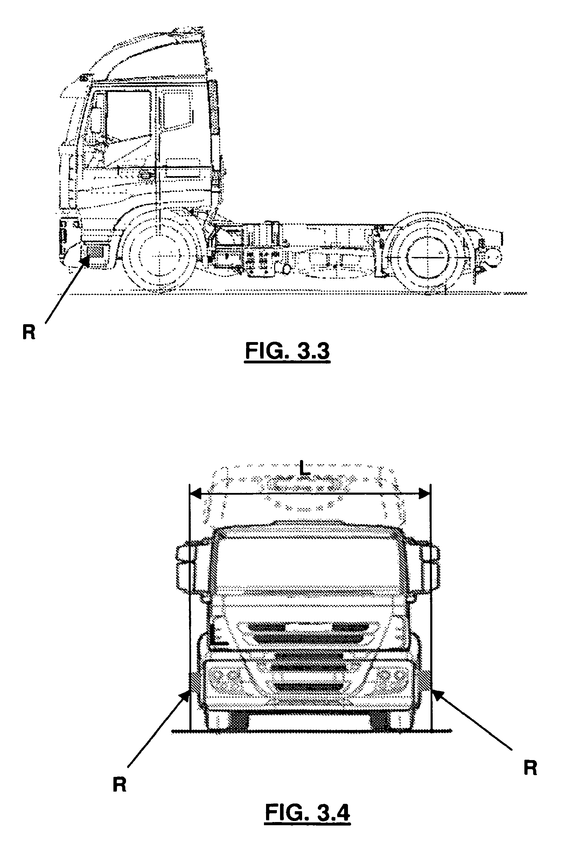

Figures 3.3 and 3.4 show another example of optimal positioning of the radar R, in the riser of the step of the side ladder used to get into the cabin. In this position the radar does not increase the lateral dimension L of the vehicle idling (at low speed).

The positioning of the radar, or of the two radars, one for each side of the vehicle, on the cabin area above the wheelhouse is realized by providing an appropriate compartment which allows to keep the radar, when it is folded, inside the maximum width allowed by law for stationary vehicles.

For this reason the radar may be mounted on a support of the folding type, which allows to manually or automatically fold the radar when the vehicle is stationary or has a speed above the control intervention threshold. The folding mechanism may be for example of the same type as that adopted for the rear-view mirrors, having the care to realize a stopped open position, for example of the snap type, because this position has to be very precise in order to allow its pointing function at its best.

The support holding the radar opens automatically, by means of an appropriate actuator, when the vehicle exceeds a predetermined speed. In case the support does not open when the vehicle exceeds the speed that activates the function, for example because of a failure of the actuator or of a mechanical blocking of the support, the radar detects the closed position, deactivates the function and signals to the driver that the function is not available. Possible minimal drifts of the stopped position (open position) may be compensated by the radar itself, by means of an autocalibration step, automatically activated after the opening step is completed.

The radar replaces the systems known in the art which have a video camera integrated in the rear-view mirror, removing the problems described above, improving the driving safety, because the traditional systems do not cover an area on the side of the vehicle, the so-called blind spot, and obtains a better lateral monitoring.

The control module of haptic reaction HFC performs an haptic reaction on the steering gear, that is it calculates a counteracting torque to be applied on the steering according to the detection of the positions of the other vehicles that are behind or at its sides.

Moreover, HFC may control the presence or the absence of the driver's hands on the steering wheel, providing warning signals if it is necessary. Also, HFC controls the human-machine interface module HMI, as to appropriately inform the driver on emergency or dangerous situations by means of acoustic or optical warnings.

The function of the LCA system can be realized also in case the vehicle is not equipped with the steering control module SCM and with the haptic reaction control module HFC. In this case the HMI module will provide the driver a prompt acoustic or optical signal instead of the haptic reaction, thus keeping unchanged the aim of the driving aid system for lane changing assistance. It is evident, however, that an haptic signal, which applies a counteracting torque to the steering system, provides a significant added value, and is a specificity of the function of the LCA system.
The HFC module receives the data from the LDM, LVD and SVV modules, and sends the processed data to the SCM in order to request the torque, and to the HMI module in order to inform the driver.
The main signals used are:
- signals coming from the LDM:
   vehicle lateral displacement with respect to the right or left lane line;
   vehicle angle with respect to the central axis of the lane; bending of the road;
   kind of road boundary on the right and on the left;
- signals coming from the LVD:
   presence, position and speed of the vehicles in the adjacent lanes;
- signals coming from the SCM:
   torque applied by the driver to the steering gear;
   steering angle and speed;
- vehicular signals:
   speed, yaw level, lateral acceleration, direction, direction indicator.
The HFC module calculates the torque value to be requested to the steering controller SCM in order to warn the driver of an imminent danger during the lane-change manoeuvre and generates a torque diagram as shown in fig. 5.
The calculation takes into consideration the presence of lateral vehicles and the position of the vehicle with respect to the middle of the lane and to the lane dimensions, and carries out a torque diagram as shown in fig. 5.
Three zone types may be identified:
- non intervention zone wherein the torque is 0 - until the driver keeps the vehicle in the middle of the lane, far from the lane boundaries; in this condition, even though some vehicles approach laterally, LCA does not provide any haptic reaction to the driver by means of the steering;
- intermediate zone, wherein the torque request is a linear function of: maximum value of torque request, lane width, MAXintervention, NONinternvention.
If the vehicle drifts towards the lane boundary, and a dangerous vehicle is present in the adjacent lanes, when the vehicle approaches a predetermined distance from the lane boundary, LCA applies a torque to the steering in order to provide a haptic reaction to the driver.
- maximum intervention zone, wherein the torque provided is the maximum torque request (MAX TORQUE REQUEST), when the vehicle travels in this "lateral" zone of the lane and a dangerous vehicle is present in the adjacent lanes.
The SCM module which applies the steering torque comprises preferably electronic control steering systems, and, for the application on heavy vehicles, the steering torque is preferably provided by a steering unit of the servo-assisted type with electronic control (EPS), coupled with a steering unit of the servo-assisted type with hydraulic control (HPS). The LCA system is also suitable for performing out an "override" condition, which is a condition wherein the intervention of the LCA system is bypassed or cancelled in the following conditions:
torque applied by the driver exceeding the maximum torque provided by the LCA (MAX TORQUE REQUEST);
absolute value of the steering angle exceeding a certain threshold;
steering speed exceeding a certain threshold;
lane width lower than a minimum value or higher than a maximum value;
vehicle out of the lane, for example over 0.30 m

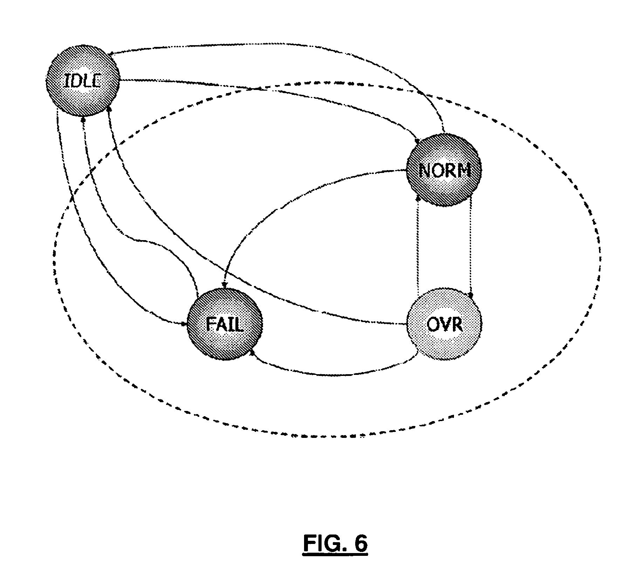

The realization of the software of the LCA system works on the basis of a finite state model, as shown in fig. 6.

Four finite states are possible:
IDLE is the initial operating state. When the vehicle is started (passing from ignition OFF to ignition ON) LCA is implicitly in IDLE, and LCA will be operating only after an explicit reactivation by the driver, and if all the reactivation conditions are verified. In this state the haptic control on the steering is disabled.
NORM is the normal operating state. When the vehicle is started (ignition state ON) LCA is on and is always enabled by means of the switching on of a switch by the driver. When the driver's request is received, if all the operating conditions are valid, the vehicle switches in NORM. In this state the haptic control on the steering is enabled. If the vehicle is in the middle of the lane, far from the boundaries, the haptic reaction on the steering is not requested, otherwise if the driver approaches the lane boundaries for a lane changing, and a relevant obstacle is present in the adjacent lane, LCA provides a counteracting torque to the steering in order to warn the driver of a danger.
LCA, by means of the LDM module, detects the beginning of a variation of the vehicle trajectory with respect to the middle of the lane, and therefore verifies if the driver, at the beginning of the lane-change manoeuvre, has or has not activated the direction indicator, and in this last case provides an acoustic or optical signal. Then it carries out the control of the lateral lane, verifying if it is or is not free, and calculating if the manoeuvre is or is not possible: if it is not possible, the system generates the counteracting torque to the steering wheel.

When the LCA system detects a dangerous situation, even though the direction indicators are activated, it applies the counteracting torque to the steering actuator of the SCM module, in order to induce the driver to keep travelling in the lane, and to avoid, this way, a dangerous lane changing.

The application of this torque opposes a resistance to the driver's tendency to change lane in terms of a resistant torque to the steering wheel. The active torque also provides an intuitive indication of the requested steering action that makes the vehicle come back within the boundaries of the desired lane.

As an additional functionality, the electronic processing means may comprise various other functions such as for example the signalling of other vehicles overtaking the stationary vehicle or the signalling of other vehicles overtaking at low speed for example lower than 25km/h, or the detection of vehicles approaching from behind at night.

The LCA system may provide acoustic or optical indications to the driver by means of the HMI module.

OVR is the override state wherein the LCA function is temporarily disabled. The system switches to OVR when one of the override conditions occur. The driver may enable or disable the LCA system at any time. The value of the torque applied to the steering by LCA is not high, so that at any time the driver may manually disable the LCA action by applying a higher torque to the steering. This situation may take place during an emergency manoeuvre, such as that for avoid a sudden obstacle.

FAIL is the check state of a failure or defect in the LCA system. The system switches to FAIL and maintains it until the failure ceases, than it goes back to IDLE. In FAIL the haptic control is disabled.
The functions described above may be realized by means of computer programs, that may run on one or more electronic processing means, integrated together or divided into cooperating different units. Said computer programs comprise code means suitable for performing one or more steps of the functions described above, when these programs are run on a computer. For this reason the scope of the present invention is meant to cover also said computer programs and the computer-readable media that comprise a recorded message, said computer-readable media comprising the program code means for performing one or more steps of the functions described above, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. In particular the realization of the computer programs may be carried out on the basis of programming languages known in the art, of any of the types used in the application field of this invention.

## Claims

1. Lane changing assistance method for controlling of a vehicle lane changing assistance system, the vehicle comprising a steering wheel, a direction indicator, acoustic or optical means,
the assistance system comprising
- a lane detection module (LDM), comprising a system able to process the images of the road;
- a lateral detection module (LVD), comprising a radar system able to detect objects in the lateral lanes and to measure their positions and speed;
- a vehicle data module (SVV), able to detect the data on vehicular parameters;
- a control module of haptic reaction (HFC), able to receive signals from said lane (LDM) and lateral (LVD) detection modules, and vehicle data module (SVV), and to provide a counteracting torque to be transmitted to the vehicle steering system,
the method being performed according to a finite state model comprising the following states:
- NORM state, state of normal functioning, wherein the method is performed when explicitly activated by the driver;
- FAIL state, state checking a failure or a defect, in which said haptic reaction module is disabled,
and **characterized in that** it comprises the following states:
- IDLE state wherein the haptic reaction control is disabled and
- OVR state, wherein the method is overrode;
and **in that**
the method, when in NORM state, comprises the following steps in succession:
- detection of the geometry of the road and the vehicle trajectory with respect to said lateral lanes and dynamical adaptation to the changes of the road geometry by said lane detection module (LDM),
- object detection by said lateral detection module (LVD) in a specific portion of the image corresponding to the left and/or right adjacent lanes determined at the previous step,
when an object is detected in an adjacent lane:
- activation of said haptic reaction module (HFC).

2. Method according to any of the preceding claims, wherein said OVR state is reached when at least one of the following conditions is verified
- torque applied by the driver exceeding the maximum torque provided by the assistance system (LCA);
- absolute value of the steering angle exceeding a certain threshold;
- steering speed exceeding a certain threshold;
- lane width being lower than a minimum value or higher than a maximum value;
- vehicle being out of the lane over a predetermined value.

3. Method according to any of the preceding claims, wherein said activation of said haptic reaction module (HFC) implies a haptic reaction to the driver by means of the steering, wherein the torque reaction is a linear function of
- distance of the vehicle from the lane boundary
- maximum value of torque request,
- lane width.

4. Method according to any of the preceding claims, further comprising the subsequent steps:
- detection of the trajectory of the vehicle,
- detection of the beginning of a variation of the vehicle trajectory with respect to the middle of the lane,
- checking of the activation of direction indicator, and if the direction indicator is not active, then
- providing an acoustic or optical signal.

5. Method according to claim 4, further comprising the step of verifying if the manoeuvre is or is not possible, and if it is not possible, generating said haptic reaction torque to the steering wheel.

6. Computer program comprising program code means suitable for performing the steps of claims 1 - 5, when such program is run on a computer.

7. Computer-readable means comprising a recorded program, said computer-readable means comprising program code means suitable for performing the steps according to claims 1 - 5, when said program is run on a computer.

## Patentansprüche

1. Spurwechselassistenzverfahren zur Steuerung eines Fahrzeugspurwechselassistenzsystems, wobei das Fahrzeug ein Lenkrad, einen Richtungsanzeiger, ein akustisches oder optisches Mittel umfasst,
wobei das Assistenzsystem umfasst:
- ein Spurdetektionsmodul (LDM), das ein System umfasst, das in der Lage ist, die Bilder der Straße zu verarbeiten;
- ein Seitendetektionsmodul (LVD), das ein Radarsystem umfasst, das in der Lage ist, Objekte auf den seitlichen Spuren zu detektieren und deren Positionen und Geschwindigkeit zu messen;
- ein Fahrzeugdatenmodul (SVV), das in der Lage ist, die Daten an Fahrzeugparametern zu detektieren;
- ein Steuermodul für haptische Reaktion (HFC), das in der Lage ist, Signale von dem Spurdetektionsmodul (LDM) und Seitendetektionsmodul (LVD) und dem Fahrzeugdatenmodul (SVV) aufzunehmen und ein entgegenwirkendes Drehmoment zur Übertragung an das Fahrzeuglenksystem bereitzustellen, wobei das Verfahren gemäß einem Endzustandsmodell ausgeführt wird, das die folgenden Zustände umfasst:
- einen NORM-Zustand, einen Zustand einer normalen Funktion, bei dem das Verfahren ausgeführt wird, wenn es durch den Fahrer explizit aktiviert wird;
- einen FEHLER-Zustand, einen Zustand, der einen Fehler oder einen Defekt prüft, bei dem das Modul für haptische Reaktion abgeschaltet ist,
und **dadurch gekennzeichnet, dass** es die folgenden Zustände umfasst:
- einen LEERLAUF-Zustand, bei dem die Steuerung der haptischen Reaktion abgeschaltet ist, und
- einen OVR-Zustand, bei dem das Verfahren außer Kraft gesetzt wird;
und dass
das Verfahren im NORM-Zustand die folgenden Schritte in Folge umfasst:
- Detektion der Geometrie der Straße und der Fahrzeugtrajektorie in Bezug auf die seitlichen Spuren und dynamische Adaption an die Änderungen der Straßengeometrie durch das Spurdetektionsmodul (LDM),
- Objektdetektion durch das Seitendetektionsmodul (LVD) in einem spezifischen Abschnitt des Bildes, der den linken und/oder rechten benachbarten Spuren, die an dem vorhergehenden Schritt bestimmt wurden, entspricht,
wenn ein Objekt in einer benachbarten Spur detektiert wird:
- Aktivieren des Moduls für haptische Reaktion (HFC).

2. Verfahren nach einem der vorhergehenden Ansprüche,
wobei der OVR-Zustand erreicht ist, wenn zumindest eine der folgenden Bedingungen verifiziert ist:
- ein durch den Fahrer angelegtes Drehmoment überschreitet das maximale Drehmoment, das durch das Assistenzsystem (LCA) bereitgestellt wird;
- ein Absolutwert des Lenkwinkels überschreitet eine gewisse Schwelle;
- eine Lenkgeschwindigkeit überschreitet eine gewisse Schwelle;
- eine Spurbreite ist geringer als ein minimaler Wert oder höher als ein maximaler Wert;
- das Fahrzeug befindet sich außerhalb der Spur über einen vorbestimmten Wert.

3. Verfahren nach einem der vorhergehenden Ansprüche, wobei die Aktivierung des Moduls für haptische Reaktion (HFC) eine haptische Reaktion für den Fahrer mittels der Lenkung impliziert, wobei die Drehmomentreaktion eine lineare Funktion ist aus
- Distanz des Fahrzeugs von der Spurbegrenzung
- maximaler Wert an Drehmomentanforderung,
- Spurbreite.

4. Verfahren nach einem der vorhergehenden Ansprüche, ferner mit den nachfolgenden Schritten:
- Detektion der Trajektorie des Fahrzeugs,
- Detektion des Beginns einer Variation der Fahrzeugtrajektorie in Bezug auf die Mitte der Spur,
- Prüfen der Aktivierung des Richtungsanzeigers, und wenn der Richtungsanzeiger nicht aktiv ist, dann
- Bereitstellen eines akustischen oder optischen Signals.

5. Verfahren nach Anspruch 4 , ferner mit dem Schritt zum Verifizieren, ob das Manöver möglich oder nicht möglich ist, und, wenn es nicht möglich ist, Erzeugen des Drehmoments für haptische Reaktion an dem Lenkrad.

6. Computerprogramm, mit einem Programmcodemittel, das zur Ausführung der Schritte der Ansprüche 1 bis 5 geeignet ist, wenn ein solches Programm an einem Computer läuft.

7. Computerlesbares Mittel mit einem aufgezeichneten Programm, wobei das computerlesbare Mittel ein Programmcodemittel umfasst, das zur Ausführung der Schritte nach einem der Ansprüche 1 bis 5 geeignet ist, wenn das Programm an einem Computer läuft.

## Revendications

1. Procédé d'aide au changement de voie permettant de réguler un système d'aide au changement de voie de véhicule, le véhicule comprenant un volant, un indicateur de direction, un moyen acoustique ou optique,
le système d'aide comprenant
- un module de détection de voie (LDM), comprenant un système capable de traiter les images de la route ;
- un module de détection latérale (LVD), comprenant un système de radar capable de détecter des objets dans les voies latérales et de mesurer leurs positions et leur vitesse ;
- un module de données de véhicule (SVV), capable de détecter les données sur des paramètres de véhicule ;
- un module de régulation de réaction haptique (HFC), capable de recevoir des signaux desdits modules de détection de voie (LDM) et latérale (LVD), et du module de données de véhicule (SVV), et de fournir un couple résistant à transmettre à la direction du véhicule,
le procédé étant réalisé selon un modèle d'état fini comprenant les états suivants :
- un état NORM, état de fonctionnement normal, dans lequel le procédé est réalisé lorsqu'il est activé explicitement par le conducteur ;
- un état ECH, état vérifiant un échec ou un défaut, dans lequel ledit module de réaction haptique est désactivé,
et **caractérisé en ce qu'**il comprend les états suivants :
- un état INACT dans lequel la régulation de réaction haptique est désactivée et
- un état ANN, dans lequel le procédé est annulé ;
et **en ce que**
le procédé, en état NORM, comprend les étapes suivantes consécutives :
- détection de la géométrie de la route et de la trajectoire du véhicule par rapport auxdites voies latérales et adaptation dynamique aux changements de la géométrie de la route par ledit module de détection de voie (LDM),
- détection de l'objet par ledit module de détection latérale (LVD) dans une portion spécifique de l'image correspondant aux voies adjacentes gauche et droite déterminées à l'étape précédente,
lorsqu'un objet est détecté dans une voie adjacente :
- activation dudit module de réaction haptique (HFC).

2. Procédé selon la revendication précédente, dans lequel ledit état ANN est atteint lorsqu'au moins une des conditions suivantes est vérifiée
- couple appliqué par le conducteur dépassant le couple maximal prévu par le système d'aide (LCA) ;
- valeur absolue de l'angle de braquage dépassant un certain seuil ;
- vitesse de braquage dépassant un certain seuil ;
- largeur de voie inférieure à une valeur minimale ou supérieure à une valeur maximale ;
- véhicule en dehors de la voie au-delà d'une valeur prédéterminée.

3. Procédé selon l'une quelconque des revendications précédentes, dans lequel ladite activation dudit module de réaction haptique (HFC) implique une réaction haptique pour le conducteur au moyen du volant, dans lequel la réaction de couple est une fonction linéaire de
- la distance du véhicule par rapport à la limite de la voie
- la valeur maximale de la demande de couple,
- la largeur de la voie.

4. Procédé selon l'une quelconque des revendications précédentes, comprenant en outre les étapes ultérieures suivantes :
- détection de la trajectoire du véhicule,
- détection du commencement d'une variation de la trajectoire du véhicule par rapport au milieu de la voie,
- vérification de l'activation de l'indicateur de direction, et si l'indicateur de direction n'est pas actif, alors
- fourniture d'un signal acoustique ou optique.

5. Procédé selon la revendication 4, comprenant en outre l'étape de vérification consistant à déterminer si la manoeuvre est possible ou non, et si elle n'est pas possible, générer ledit couple de réaction haptique sur le volant.

6. Programme informatique comprenant un moyen de code de programme adapté pour réaliser les étapes des revendications 1 à 5, lorsqu'un tel programme est exécuté sur un ordinateur.

7. Moyen lisible par ordinateur comprenant un programme enregistré, ledit moyen lisible par ordinateur comprenant un moyen de code de programme adapté pour réaliser les étapes selon les revendications 1 à 5, lorsque ledit programme est exécuté sur un ordinateur.
